# DEMANDE DE BREVET EUROPEEN

(11) **EP 4 737 325 A1**
(43) Date de publication de la demande: **06.05.2026**
(21) Numéro de dépôt: 25188816.0
(22) Date de dépôt: 10.07.2025
(51) Int. Cl.: B64D 31/06, F02C 9/28, F02C 9/42

(54) **PROCEDE DE REACTIVATION D'UN MOTEUR A COMBUSTION EN VEILLE DURANT UN MODE DE FONCTIONNEMENT ASYMETRIQUE AU SEIN D'UN AERONEF MULTIMOTEUR**

(30) Priorité: 29.10.2024 FR 2411828
(71) Demandeur: Airbus Helicopters, 13725 Marignane Cedex (FR)
(72) Inventeur: CERQUEIRA, Stéphane, 13510 EGUILLES (FR)
(74) Mandataire: GPI Brevets

(57) **Abrégé**

La présente invention concerne un procédé de pilotage d'un aéronef (1) multimoteur ayant un mode de fonctionnement asymétrique durant lequel au moins un moteur (10) est un moteur actif régulé par un système de régulation (55) en développant une puissance motrice active non nulle participant à la mise en rotation d'un rotor (5) et au moins un moteur (10) est un moteur passif en veille. Lors du mode de fonctionnement asymétrique, le procédé comporte les étapes suivantes :
- détection, avec le système de régulation (55), d'un fonctionnement de l'installation motrice (2) dans une phase de vol à risque précédant une phase de vol défavorable à une sortie du mode de fonctionnement asymétrique,
- suite à ladite détection d'un fonctionnement de l'installation motrice (2) dans la phase de vol à risque, réactivation du moteur passif.

## Description

La présente invention concerne un procédé de réactivation d'un moteur à combustion en veille durant un mode de fonctionnement asymétrique au sein d'un aéronef multimoteur.

Un aéronef peut comprendre plusieurs moteurs à combustion pour mettre en mouvement un système mécanique, et par exemple un système mécanique mettant en rotation au moins une voilure tournante sur un hélicoptère.

Les moteurs à combustion peuvent prendre la forme d'un turbomoteur, éventuellement à turbine libre. Un turbomoteur à turbine libre comprend un générateur de gaz muni d'un compresseur, d'une chambre de combustion et d'un ensemble de détente haute pression solidaire en rotation du compresseur. Le compresseur peut être muni d'un ou de plusieurs étages de compression. De même, l'ensemble de détente peut comprendre une ou plusieurs turbines de détente. En outre, le turbomoteur à turbine libre comporte au moins une turbine de travail basse pression, à savoir indépendante mécaniquement en rotation du compresseur et de l'ensemble de détente haute pression. La turbine de travail met alors en rotation un arbre de puissance connecté au système mécanique à mettre en mouvement.

Selon un autre exemple, un moteur à combustion peut comprendre un moteur à pistons.

Ainsi, un aéronef à voilure tournante peut comprendre une installation motrice ayant plusieurs moteurs à combustion pour mettre en mouvement un système mécanique, et en particulier une chaîne de transmission de puissance mettant notamment en rotation au moins une voilure tournante.

L'installation motrice peut éventuellement fonctionner selon un mode de fonctionnement coopératif durant lequel les moteurs à combustion génèrent chacun une puissance motrice contribuant conjointement à mettre en mouvement le système mécanique.

L'installation motrice peut aussi fonctionner selon un mode de fonctionnement asymétrique en mettant en veille au moins un des moteurs à combustion durant certaines phases de fonctionnement de l'aéronef. Sur un aéronef à voilure tournante, lors du mode asymétrique, au moins un moteur actif est régulé pour assurer la mise en rotation de la voilure tournante en transmettant à la voilure tournante avec son arbre de puissance une puissance motrice active non nulle. Au moins un moteur passif peut en revanche être en veille.

Un moteur en veille peut être arrêté en ayant une chambre de combustion arrêtée. La chambre de combustion du moteur passif n'est alors plus alimentée en carburant, et sur un turbomoteur les organes tournants du générateur de gaz peuvent être ou ne pas être mis en mouvement par une machine électrique. Alternativement, un moteur en veille peut fonctionner à un régime de ralenti ou de super-ralenti, en ayant une chambre de combustion allumée et alimentée en carburant, le moteur en veille fonctionnant à très faible vitesse et ne transmettant cependant aucune puissance à la voilure tournante, le ou les moteurs actifs assurant l'intégralité de la fourniture de puissance. Par exemple, le moteur passif est dans un régime de ralenti en ayant une vitesse de rotation de l'ordre de 40% de sa vitesse nominale.

Le document EP 3209563 décrit notamment un mode de fonctionnement asymétrique.

Pour sortir du mode de fonctionnement asymétrique, le moteur passif doit être réactivé, en étant piloté pour augmenter la puissance développée. Toutefois, la réactivation peut être difficile dans certaines conditions.

Le document FR 3135965 propose de réchauffer un moteur à combustion en veille avec de l'air chaud provenant d'un moteur à combustion actif, lorsque le moteur à combustion en veille est dans des conditions givrantes.

La présente invention a alors pour objet de proposer un procédé et un aéronef visant à optimiser la réactivation d'un moteur à combustion en veille durant un mode de fonctionnement asymétrique en suivant une autre stratégie que le document FR 3135965.

L'invention vise ainsi un procédé de pilotage d'un aéronef, ledit aéronef ayant une installation motrice comprenant au moins deux moteurs à combustion et une chaîne de transmission connectée à au moins un rotor, chaque moteur à combustion ayant un arbre de puissance connecté à la chaîne de transmission, le procédé comportant un mode de fonctionnement asymétrique comprenant une régulation à un régime actif, avec un système de régulation, d'au moins un moteur actif parmi les au moins deux moteurs à combustion, le moteur actif développant, lors du régime actif et avec son arbre de puissance, une puissance motrice active non nulle participant à la mise en rotation du rotor, le mode de fonctionnement asymétrique comprenant, conjointement à la régulation du moteur actif au régime actif, une mise en veille d'au moins un moteur passif parmi les au moins deux moteurs à combustion, le moteur passif ne transmettant aucune puissance au rotor.

Par suite, lors du mode de fonctionnement asymétrique, le procédé comporte les étapes suivantes :
- détection, avec le système de régulation, d'un fonctionnement de l'installation motrice dans une phase de vol à risque précédant une phase de vol défavorable à une sortie du mode de fonctionnement asymétrique, et donc à la réactivation du moteur passif pour rejoindre un mode de fonctionnement collaboratif,
- suite à ladite détection d'un fonctionnement de l'installation motrice dans la phase de vol à risque, réactivation, avec le système de régulation, du moteur passif, qui devient alors un moteur actif régulé à un régime actif.

Le système de régulation peut comprendre une partie du système avionique de l'aéronef.

Ainsi, le procédé va à l'encontre de préjugés résultant du document FR 3135965 qui suggère de réchauffer un moteur en veille. Les documents US2020256265A1, FR3135965A1 et WO2024161091A1 également sont connus.

Lors du mode de fonctionnement asymétrique, au moins un moteur à combustion est volontairement mis en veille, le ou les moteurs actifs assurant l'intégralité de la fourniture de puissance. Le moteur passif peut avoir une chambre de combustion arrêtée et sur un turbomoteur les organes tournants du générateur de gaz peuvent être mis en mouvement par une machine électrique. Alternativement, le moteur passif peut avoir une chambre de combustion allumée sans transmettre une puissance motrice au rotor. Le moteur passif a dans ce cas une vitesse de rotation faible par rapport à sa vitesse nominale, par exemple de l'ordre de 40% de la vitesse nominale.

Le moteur passif est ventilé, l'air extérieur continuant à circuler dans ce moteur, en particulier lorsque l'aéronef comporte une entrée d'air dynamique.

Dès lors, l'invention propose de surveiller les conditions de vol courantes pour déterminer si l'aéronef évolue dans une phase de vol à risque susceptible de conduire l'aéronef à évoluer à court terme dans des conditions de vol défavorables à une sortie du mode de fonctionnement asymétrique. Dans l'affirmative, le moteur passif est réactivé avant que les conditions de vol défavorables soient atteintes. La chambre de combustion est le cas échéant rallumée. Si le moteur passif est dans un régime de ralenti, ce moteur passif est réactivé en étant accéléré avant que les conditions de vol défavorables à la réactivation soient atteintes. La présente invention permet ainsi de sécuriser le mode de fonctionnement asymétrique.

Le procédé peut de plus comprendre une ou plusieurs des caractéristiques qui suivent, prises seules ou en combinaison.

Selon une première variante, suite à la détection d'un fonctionnement de l'installation motrice dans la phase de vol à risque, le procédé peut comporter une émission d'une alarme avec un alerteur, ledit système de régulation effectuant ladite réactivation du moteur passif suite à une manœuvre d'une interface homme-machine de commande.

Dans ce cas, le procédé prévoit d'alerter un pilote que les conditions de vol courantes impliquent la sortie du mode asymétrique. Le pilote peut alors manœuvrer l'interface homme-machine de commande à cet effet. Cette interface peut aussi servir à activer le mode asymétrique.

Selon une deuxième variante, ladite réactivation du moteur passif peut être réalisée automatiquement par le système de régulation suite à ladite détection d'un fonctionnement de l'installation motrice dans la phase de vol à risque.

Dans ce cas, le système de régulation réactive automatiquement le moteur passif. Une alarme peut être émise en parallèle avec l'alerteur pour prévenir le pilote de la sortie du mode de fonctionnement asymétrique.

Eventuellement, l'aéronef peut comprendre une interface de paramétrage pour qu'un pilote puisse sélectionner l'application de la première variante ou de la deuxième variante.

Selon une possibilité compatible avec les précédentes, le procédé peut comporter une mesure d'au moins un paramètre de surveillance avec un senseur respectif du système de régulation, et ladite détection d'un fonctionnement de l'installation motrice dans la phase de vol à risque peut comporter la détection que ledit paramètre de surveillance a une valeur courante inférieure à une limite associée.

Au moins un paramètre de surveillance de l'aéronef est mesuré et comparé à une limite qui lui est propre, pour déterminer s'il faut sortir du mode de fonctionnement asymétrique. Pour chaque paramètre de surveillance, la valeur de la limite associée peut être établie par essais, calculs, et/ou simulations.

Par exemple, ledit au moins un paramètre de surveillance peut comporter au moins un des paramètres suivants :
- une valeur de température fonction d'une température extérieure de l'air entournant l'aéronef mesurée avec un senseur de température extérieure et ladite limite associée est une limite de température extérieure mémorisée, ladite détection d'un fonctionnement de l'installation motrice dans la phase de vol à risque comportant la détection que la valeur de température est inférieure à la limite de température extérieure mémorisée, et
- une température d'huile d'une huile d'un circuit de lubrification du moteur passif mesurée avec un senseur de température d'huile et ladite limite associée est une limite de température d'huile mémorisée, ladite détection d'un fonctionnement de l'installation motrice dans la phase de vol à risque comportant la détection que ladite température d'huile a une valeur courante inférieure à la limite de température d'huile mémorisée, et
- une température de carburant d'un carburant d'un carburant alimentant le moteur passif mesurée avec un senseur de température de carburant et ladite limite associée est une limite de température de carburant mémorisée, ladite détection d'un fonctionnement de l'installation motrice dans la phase de vol à risque comportant la détection que ladite température de carburant a une valeur courante inférieure à une limite de température de carburant mémorisée.

Eventuellement, les trois paramètres précités sont surveillés simultanément.

En effet, l'air extérieur circule dans le moteur passif. Cette température de l'air extérieur a dès lors un impact sur la température des organes du moteur passif.

En outre, les conditions environnementales ont un impact sur les températures de l'huile moteur et du carburant. La réactivation du moteur passif peut être délicate en présence de températures d'huile et/ou de carburant particulièrement basses.

Eventuellement, la valeur de température précitée peut être égale à la température extérieure mesurée avec le senseur de température extérieure.

Alternativement, la valeur de température précitée peut être calculée, par le système de régulation, en fonction de la température extérieure et d'une vitesse courante de l'aéronef mesurée avec un senseur de vitesse.

Par exemple, une telle vitesse courante peut être la vitesse air de l'aéronef. Plus la vitesse courante de l'aéronef est élevée, plus le moteur passif est gavé d'air extérieur frais. Dès lors, le système de régulation peut comprendre une loi mathématique fournissant la valeur de température en fonction non seulement de la température extérieure, mais aussi de cette vitesse courante pour prendre en compte ce gavage d'air susceptible de refroidir le moteur passif.

De manière complémentaire ou alternative, ledit au moins un paramètre de surveillance peut comporter une température environnante dans un compartiment moteur logeant le moteur passif mesurée avec un senseur de température environnante et ladite limite associée est une limite de température environnante mémorisée, ladite détection d'un fonctionnement de l'installation motrice dans la phase de vol à risque comportant la détection que ladite température environnante a une valeur courante inférieure à la limite de température environnante mémorisée.

En effet, la température régnant dans le compartiment moteur du moteur passif peut avoir un impact sur le fonctionnement de ce moteur.

De manière complémentaire ou alternative, ledit au moins un paramètre de surveillance peut comporter une température interne dans le moteur passif mesurée avec un senseur de température interne et ladite limite associée est une limite de température interne mémorisée, ladite détection d'un fonctionnement de l'installation motrice dans la phase de vol à risque comportant la détection que ladite température interne a une valeur courante inférieure à la limite de température interne mémorisée.

Par exemple, la température régnant dans la chambre de combustion peut être mesurée, une réactivation pouvant être difficile en dessous d'une limite associée.

De manière complémentaire ou alternative, voire notamment si le moteur passif est dans un régime de ralenti, ledit au moins un paramètre de surveillance peut comporter une pression d'huile d'une huile d'un circuit de lubrification du moteur passif, ladite pression d'huile étant mesurée avec un senseur de pression d'huile et ladite limite associée étant une limite de pression d'huile mémorisée, ladite détection d'un fonctionnement de l'installation motrice dans la phase de vol à risque comportant la détection que ladite pression d'huile a une valeur courante inférieure à la limite de pression d'huile mémorisée.

De manière complémentaire ou alternative, voire notamment si le moteur passif est dans un régime de ralenti ledit au moins un paramètre de surveillance peut comporter une pression de carburant d'un carburant alimentant le moteur passif et ladite limite associée est une limite de pression de carburant mémorisée, ladite pression de carburant étant mesurée avec un senseur de pression de carburant, ladite détection d'un fonctionnement de l'installation motrice dans la phase de vol à risque comportant la détection que ladite pression de carburant a une valeur courante inférieure à la limite de pression de carburant mémorisée.

Selon une possibilité compatible avec les précédentes, le procédé de pilotage selon l'invention peut comporter une émission avec l'alerteur d'une alerte signalant un fonctionnement de l'aéronef dans une phase transitoire quand ledit au moins un paramètre de surveillance est supérieur ou égal à ladite limite associée et inférieure ou égal à un seuil associé, le seuil associé étant supérieur à ladite limite associée.

Une deuxième limite peut être mise en œuvre pour chaque paramètre de surveillance. Cette deuxième limite est dénommée « seuil » pour être distinguée de la limite impliquant nécessairement la sortie du mode de fonctionnement asymétrique. Ainsi, une alerte est émise lorsqu'un paramètre de surveillance a une valeur qui est comprise entre le seuil et la limite associés. Cette alerte permet de signaler à un pilote que l'aéronef se rapproche de conditions de vol impliquant la sortie du mode de fonctionnement asymétrique. Un pilote peut alors choisir de sortir de ces conditions de vol, par exemple en ralentissant et/ou en réduisant l'altitude de l'aéronef, de sortir du mode de fonctionnement asymétrique, ou peut simplement être plus attentif à l'évolution des conditions de vol.

L'invention vise aussi un aéronef, ledit aéronef ayant une installation motrice comprenant au moins deux moteurs à combustion et une chaîne de transmission connectée à au moins un rotor, chaque moteur à combustion ayant un arbre de puissance connecté à la chaîne de transmission, ledit aéronef comportant un mode de fonctionnement asymétrique comprenant une régulation à un régime actif, avec un système de régulation, d'au moins un moteur actif parmi les au moins deux moteurs à combustion, le moteur actif développant lors du régime actif et avec son arbre de puissance une puissance motrice active non nulle participant à la mise en rotation du rotor, le mode de fonctionnement asymétrique comprenant, conjointement à la régulation du moteur actif au régime actif, une mise en veille d'au moins un moteur passif parmi les au moins deux moteurs à combustion, le moteur passif ne transmettant aucune puissance au rotor.

Le système de régulation est alors configuré pour mettre en œuvre le procédé de l'invention.

A cet effet, le système de régulation peut comprendre au moins un contrôleur configuré pour : i) détecter un fonctionnement de l'installation motrice dans une phase de vol à risque, par exemple en comparant la valeur courante d'un ou de plusieurs paramètres de surveillance à une ou des limites respectives, et ii) suite à ladite détection d'un fonctionnement de l'installation motrice dans la phase de vol à risque, réactiver le moteur passif, et ainsi sortir du mode asymétrique.

A cet effet, le système de régulation peut comporter au moins un des senseurs suivants : un senseur de température extérieure mesurant une température extérieure de l'air entournant l'aéronef, un senseur de température d'huile par moteur à combustion mesurant une température d'huile d'une huile circulant dans le moteur à combustion, un senseur de température de carburant, éventuellement commun ou par moteur ,mesurant une température de carburant d'un carburant alimentant chaque moteur à combustion, un senseur de vitesse mesurant une vitesse courante de l'aéronef, un senseur de température environnante par moteur à combustion mesurant une température environnante dans un compartiment logeant un moteur à combustion, un senseur de température interne par moteur à combustion mesurant une température interne dans le moteur à combustion, un senseur de pression d'huile par moteur à combustion, un senseur de pression de carburant par moteur à combustion mesurant une pression de carburant du carburant circulant dans le moteur à combustion.

En outre, le système de régulation peut comporter un alerteur.

L'invention et ses avantages apparaîtront avec plus de détails dans le cadre de la description qui suit avec des exemples donnés à titre illustratif en référence aux figures annexées qui représentent :
la figure 1, une vue d'un aéronef selon l'invention, et
la figure 2, un schéma illustrant le procédé appliqué.

Les éléments présents dans plusieurs figures distinctes sont affectés d'une seule et même référence.

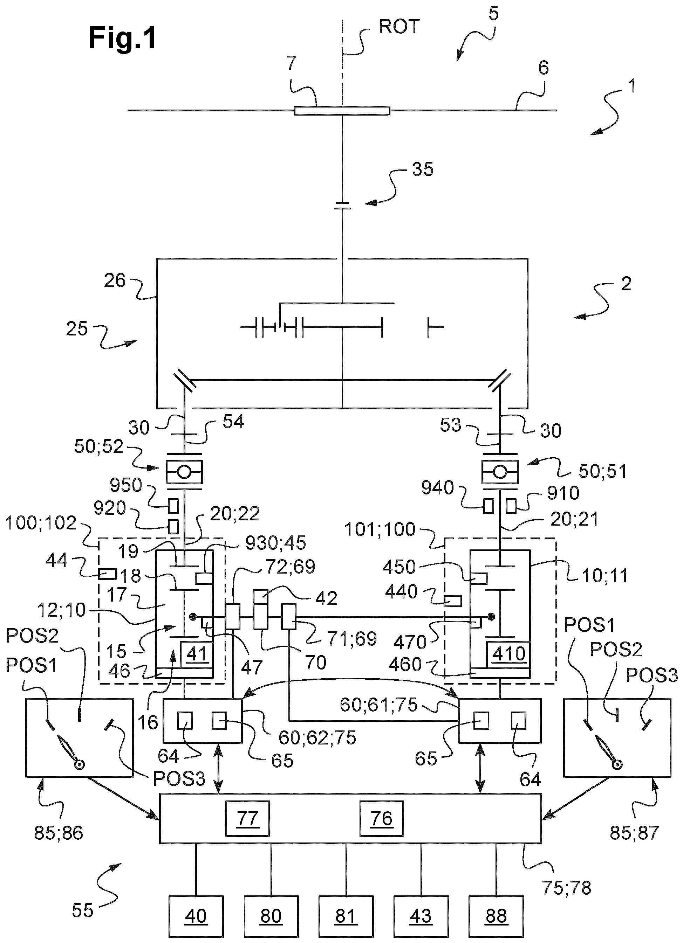

La figure 1 présente un exemple d'aéronef 1 selon l'invention. Cet aéronef 1 comporte un rotor 5. Ce rotor 5 est muni d'une pluralité de pales 6 mobiles en rotation et éventuellement portées par un moyeu 7 ou équivalent. Par exemple, le rotor 5 forme une hélice fixe ou basculante, une voilure tournante, un rotor anticouple.

L'aéronef 1 comporte une installation motrice 2 pour mettre en rotation le rotor 5. Cette installation motrice 2 est pourvue d'au moins deux moteurs à combustion 10. La référence 10 désigne n'importe quel moteur à combustion, les références 11, 12 désignant des moteurs particuliers si besoin. Chaque moteur à combustion 10 est logé dans un compartiment moteur 100. La référence 100 désigne n'importe quel compartiment moteur, les références 101, 102 désignant les compartiments moteurs respectivement des moteurs à combustion 11, 12.

Selon un exemple, au moins un moteur à combustion 10 peut être un turbomoteur. Un tel turbomoteur 10 comporte un générateur de gaz 15 qui est muni d'au moins une turbine de compression 16, d'une chambre de combustion 17 dans laquelle est injecté le carburant et d'au moins une turbine de détente 18 liée en rotation à la ou aux turbines de compression 16. De plus, le turbomoteur 10 peut comporter au moins une turbine de travail 19 qui met en mouvement directement ou indirectement un arbre de puissance 20 du moteur 10.

Alternativement, au moins un moteur à combustion 10 peut être un moteur à pistons muni de chambres de combustion et d'un arbre de puissance.

Indépendamment du type des moteurs, chaque moteur à combustion 10 comporte donc un arbre de puissance 20 connecté à une chaîne de transmission de puissance 25. La chaîne de transmission de puissance 25 est alors reliée de manière usuelle au rotor 5. La référence 20 désigne n'importe quel arbre de puissance, les références 21, 22 désignant des arbres de puissance particuliers respectivement des deux moteurs 11 ,12.

A titre illustratif, la chaîne de transmission de puissance 25 peut être munie d'une boîte de transmission de puissance 26 qui est mécaniquement interposée entre les moteurs 10 et le rotor 5. La boîte de transmission de puissance 26 peut être munie d'un arbre d'entrée 30 par moteur 10 et d'engrenages divers agencés entre les arbres d'entrée 30 et un mât rotor 35 solidaire du moyeu 7.

La chaîne de transmission de puissance 25 peut comprendre au moins une roue libre 50, 51, 52, par exemple entre chaque moteur 10 et la boîte de transmission de puissance 26, et/ou au moins un arbre de liaison 53, 54, et/ou au moins un connecteur autorisant des désalignements... La littérature décrit diverses boîtes de transmission de puissance et diverses chaines mécaniques, l'exemple décrit étant donné uniquement à titre illustratif.

Par ailleurs, les moteurs 10 sont des moteurs à combustion fonctionnant avec du carburant et pouvant être démarrés par des démarreurs non illustrés pour ne pas alourdir la figure. Dès lors, l'aéronef 1 comporte un système de régulation 55 pour piloter les démarreurs et la puissance délivrée par chaque moteur 10 avec son arbre de puissance 20.

Ainsi, le système de régulation 55 comporte un doseur de carburant 69 par moteur 10. Chaque moteur 10 est alors relié via son propre doseur de carburant 69 à au moins un réservoir de carburant 70. La référence 69 désigne n'importe quel doseur de carburant, les références 71, 72 désignant des doseurs de carburant particuliers respectivement des deux moteurs 11 ,12.

Le système de régulation 55 peut comporter un calculateur moteur 60 par moteur 10. Chaque calculateur moteur 60 peut comprendre une unité de traitement. Une telle unité de traitement peut avoir par exemple, au moins un processeur 64 et au moins une mémoire 65, au moins un circuit intégré, au moins un système programmable, au moins un circuit logique, ces exemples ne limitant pas la portée donnée à l'expression « unité de traitement ». Les calculateurs moteurs 60 peuvent communiquer entre eux par des liaisons filaires ou non filaires.

Selon l'exemple décrit, l'installation motrice 2 comporte deux calculateurs moteur 61, 62 contrôlant respectivement deux moteurs 11, 12. Chaque calculateur moteur 60 est configuré pour piloter le moteur 10 associé et le faire fonctionner selon le régime requis. Chaque calculateur moteur 61, 62 peut notamment contrôler le doseur de carburant 71, 72 de ce moteur 11, 12. Chaque calculateur moteur 61,62 peut être relié à de multiples capteurs pour contrôler le moteur 11,12 associé, tel que par exemple un capteur de température 930 mesurant la température de gaz par exemple à l'entrée d'une turbine libre, un capteur de vitesse mesurant par exemple la vitesse de rotation d'un générateur de gaz du turbomoteur, un couplemètre 910, 920 mesurant un couple moteur sur un organe tournant, un capteur de vitesse 940, 950 mesurant par exemple la vitesse de rotation de cet organe tournant, un couplemètre mesurant un couple exercé sur le mât rotor 35, un capteur de vitesse mesurant par exemple la vitesse de rotation de ce mât rotor 35, un capteur mesurant la pression extérieure, un capteur mesurant la température extérieure...

Les calculateurs moteurs 60 peuvent former un contrôleur 75 appliquant le procédé de l'invention, ou un calculateur de gestion 78 du système de régulation 55 peut faire office de contrôleur 75. Le calculateur de gestion 78 peut comprendre par exemple au moins une unité de traitement. Le calculateur de gestion 78 peut communiquer par des liaisons filaires ou non filaires avec chaque calculateur moteur 60. Le calculateur de gestion 78 peut communiquer avec chacun des systèmes de mesure précités, directement ou via un calculateur moteur.

Indépendamment de sa composition, le contrôleur 75 peut communiquer par une liaison filaire ou non filaire avec au moins un alerteur 80 pour fournir des informations à un pilote. Un tel alerteur 80 peut, par exemple, comprendre un afficheur apte à afficher un message, une diode électroluminescente qui s'allume sur commande du contrôleur 75, un haut-parleur...

En outre, le contrôleur 75 peut communiquer avec une interface homme-machine de paramétrage 81.

En outre, le contrôleur 75 peut communiquer avec au moins une interface homme-machine de pilotage 85, voire avec une interface homme-machine de pilotage par moteur 10, soit deux interfaces 86, 87 selon l'exemple donné. Chaque interface homme-machine de pilotage 85 peut par exemple émettre un signal porteur d'un ordre d'arrêt, d'un ordre de mise au régime de ralenti ou d'un ordre de mise à un régime de vol du moteur 10 concerné. La figure 1 illustre des interfaces à trois positions arrêt POS1/ ralenti POS2/vol POS 3 à cet effet.

En outre, le contrôleur 75 peut communiquer avec une interface homme-machine de commande 88 qui est manipulable pour activer, voire désactiver manuellement, le mode de fonctionnement asymétrique.

Chaque interface homme machine 81, 85, 88 peut comprendre un organe manœuvrable par un pilote, tel qu'un bouton ou un levier par exemple, un écran tactile, une commande vocale... Selon l'exemple illustré, les interfaces homme-machine 81, 85, 88 et l'alerteur 80 communiquent avec le calculateur de gestion 78. De manière alternative ou complémentaire, les interfaces homme-machine 81, 85, 88 et l'alerteur 80 communiquent avec un, voire chaque, calculateur moteur 60.

Par ailleurs, le contrôleur 75 peut communiquer avec une pluralité de senseurs 40-47, 410, 440, 450, 460, 470 directement ou via un calculateur moteur. Par senseur, on entend ici un capteur physique capable de mesurer directement le paramètre en question, mais aussi un système pouvant comprendre un ou plusieurs capteur(s) physique(s) ainsi que des moyens de traitement du signal permettant de fournir une estimation du paramètre à partir des mesures fournies par ces capteurs physiques. De manière similaire, on désignera par mesure de ce paramètre aussi bien une mesure brute d'un capteur physique qu'une mesure obtenue par un traitement de signal plus ou moins complexe à partir de mesures brutes.

Ainsi, le contrôleur 75 peut communiquer avec un ou plusieurs des senseurs suivants :
- un senseur de température extérieure 40 mesurant une température extérieure T0 de l'air entournant l'aéronef 1,
- un senseur de température d'huile 41, 410 par moteur à combustion 10 mesurant une température d'huile TOIL au sein d'un circuit de lubrification du moteur à combustion 10 associé,
- au moins un senseur de température de carburant 42 mesurant une température de carburant TFUEL d'un carburant, le système pouvant avoir un unique senseur mesurant la température du carburant dans le réservoir 70 ou un senseur par moteur mesurant une température de carburant par moteur,
- un senseur de vitesse 43 mesurant une vitesse courante de l'aéronef 1, un tel senseur de vitesse pouvant comprendre un système de positionnement par satellites et/ou un système à tube de Pitot par exemple,
- un senseur de température environnante 44, 440 par moteur 10, mesurant une température environnante TCOMP dans un compartiment moteur 100,
- un senseur de température interne 45, 450 par moteur à combustion 10 mesurant une température interne LTENG dans le moteur à combustion 10, par exemple la température dénommée par l'homme du métier « T45 » en amont de la turbine libre d'un turbomoteur,
- un senseur de pression d'huile 46, 460 par moteur à combustion 10 mesurant une pression d'huile circulant dans le circuit de lubrification d'un moteur à combustion 10,
- un senseur de pression de carburant 47 par moteur à combustion 10 mesurant une pression de carburant dudit carburant circulant dans le moteur à combustion 10.

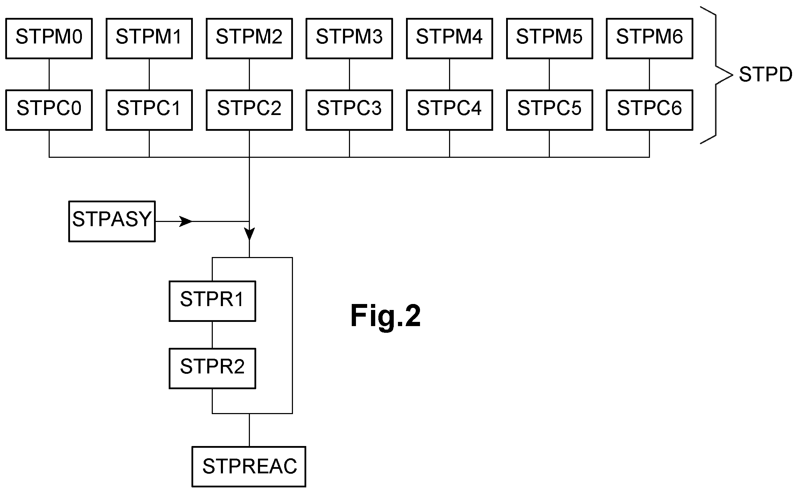

La figure 2 illustre le procédé de pilotage selon l'invention, ce procédé pouvant être mis en œuvre par un aéronef 1 à voilure tournante du type de la figure 1. Le procédé est illustré avec l'utilisation du système de régulation 55 de la figure 1. Cependant, ce procédé est applicable avec un système de régulation dépourvu d'un calculateur de gestion 78, les calculateurs moteur 60 pouvant être aisément configurés pour l'appliquer.

Durant un mode de fonctionnement collaboratif, chaque moteur à combustion 10 est un moteur dit actif qui est régulé par le système de régulation 55 pour développer avec son arbre de puissance 20 une puissance motrice active non nulle participant à la mise en rotation du rotor 5. Par exemple, la première interface homme-machine de pilotage 86 est placée dans la position POS3, et transmet un signal de commande au calculateur moteur 61. De même, la deuxième interface homme-machine de pilotage 87 est placée dans la position POS3, et transmet un signal de commande au calculateur moteur 62.

Pour activer le mode de fonctionnement asymétrique, un pilote peut manœuvrer l'interface homme-machine de commande 88. Le système de régulation maintient actif au moins des moteurs dit « moteur actif », et met en veille au moins un des moteurs dit « moteur passif ». Le ou les moteurs passifs sont alors soit arrêtés en ayant une chambre de combustion arrêtée, soit mis au ralenti afin de ne pas transmettre une puissance via la roue libre associée.

Eventuellement, le procédé peut comprendre une étape de détection STPASY, avec le système de régulation 55, que le mode de fonctionnement asymétrique est activé, par exemple en détectant l'émission d'un signal porteur d'un ordre d'appliquer ce mode de fonctionnement asymétrique par l'interface homme-machine de commande 88.

Lorsque ce mode de fonctionnement asymétrique est activé, le procédé comporte le cas échéant la détection STPD, avec le système de régulation 55, d'un fonctionnement de l'installation motrice 2 dans une phase de vol à risque précédant une phase de vol défavorable à la réactivation du moteur passif.

Dans des réalisations, ladite détection STPD, avec le système de régulation 55, d'un fonctionnement de l'installation motrice 2 dans une phase de vol à risque précédant une phase de vol défavorable à une sortie du mode de fonctionnement asymétrique est opérée indépendamment du fonctionnement dudit au moins un moteur actif parmi les au moins deux moteurs à combustion 10.

A cet effet, le procédé peut comporter la mesure STPM0-STPM6 d'un ou de plusieurs paramètres de surveillance avec un ou plusieurs des senseurs 40-47, 410, 440, 450, 460, 470 respectifs. Dès lors, le système de régulation et par exemple le contrôleur 75, détecte un fonctionnement de l'installation motrice 2 dans la phase de vol à risque si au moins un des paramètres de surveillance a une valeur courante inférieure à sa limite associée.

Un paramètre de surveillance peut être fonction de la température extérieure T0 de l'air entournant l'aéronef 1 et mesurée avec le senseur de température extérieure 40 lors d'une étape STPM0. La limite associée est alors une limite de température extérieure LT0 mémorisée dans le système de régulation 55, voire dans le contrôleur 75 par exemple. La valeur de température peut alors être égale à la température extérieure T0 ou est calculée par le contrôleur 75 à l'aide d'une loi mémorisée fonction de la température extérieure T0 et de la vitesse courante de l'aéronef 1 mesurée avec le senseur de vitesse 43. La détection STPD d'un fonctionnement de l'installation motrice 2 dans la phase de vol à risque comporte alors la détection STPC0, avec le système de régulation 55, voire le contrôleur 75, que la valeur de température est inférieure à la limite de température extérieure LT0 mémorisée.

Un paramètre de surveillance peut être une température d'huile TOIL d'une huile circulant dans le moteur passif et mesurée avec un senseur de température d'huile 41 lors d'une étape STPM1. La limite associée est alors une limite de température d'huile LTOIL mémorisée dans le contrôleur 75. La détection STPD d'un fonctionnement de l'installation motrice 2 dans la phase de vol à risque comporte ainsi la détection STPC1, avec le système de régulation 55, voire le contrôleur 75, que la température d'huile TOIL a une valeur courante inférieure à la limite de température d'huile LTOIL mémorisée.

Un paramètre de surveillance peut être une température de carburant TFUEL d'un carburant devant alimenter le moteur passif et mesurée avec un senseur de température de carburant 42 lors d'une étape STPM2. La limite associée est alors une limite de température de carburant LTFUEL mémorisée dans le contrôleur 75.

La détection STPD d'un fonctionnement de l'installation motrice 2 dans la phase de vol à risque comporte alors la détection STPC2, avec le système de régulation 55, voire le contrôleur 75, que la température de carburant TFUEL a une valeur courante inférieure à la limite de température de carburant LTFUEL mémorisée.

Un paramètre de surveillance peut être une température environnante TCOMP dans le compartiment moteur 100 logeant le moteur passif mesurée avec un senseur de température environnante 44 lors d'une étape STPM3. La limite associée est une limite de température environnante LTCOMP mémorisée dans le contrôleur 75. La détection STPD d'un fonctionnement de l'installation motrice 2 dans la phase de vol à risque comporte alors la détection STPC3, avec le système de régulation 55, voire le contrôleur 75, que la température environnante TCOMP a une valeur courante inférieure à la limite de température environnante LTCOMP mémorisée.

Un paramètre de surveillance peut être une température interne LTENG dans le moteur 10,11 passif mesurée avec un senseur de température interne 45 lors d'une étape STPM4. Ladite limite associée est une limite de température interne LTENG mémorisée dans le contrôleur 75. La détection STPD d'un fonctionnement de l'installation motrice 2 dans la phase de vol à risque comporte alors la détection STPC4, avec le système de régulation 55, voire le contrôleur 75, que la température interne LTENG a une valeur courante inférieure à la limite de température interne LTENG mémorisée.

Un paramètre de surveillance peut être une pression d'huile POIL d'une huile circulant dans le moteur passif mesurée avec un senseur de pression d'huile 46, 460 lors d'une étape STPM5. La limite associée est une limite de pression d'huile LPOIL mémorisée dans le contrôleur 75. La détection STPD d'un fonctionnement de l'installation motrice 2 dans la phase de vol à risque comporte alors la détection STPC5, avec le système de régulation 55, voire le contrôleur 75, que ladite pression d'huile POIL a une valeur courante inférieure à la limite de pression d'huile LPOIL mémorisée.

Un paramètre de surveillance peut être une pression de carburant PFUEL d'un carburant alimentant les moteurs à combustion 10 mesurée avec un senseur de pression de carburant 47, 470 lors d'une étape STPM6. La limite associée est une limite de pression de carburant LPFUEL mémorisée dans le contrôleur 75. La détection STPD d'un fonctionnement de l'installation motrice 2 dans la phase de vol à risque comporte alors la détection STPC6, avec le système de régulation 55, voire le contrôleur 75, que la pression de carburant PFUEL a une valeur courante inférieure à la limite de pression de carburant LPFUEL mémorisée.

Indépendamment de la manière de détecter si l'aéronef 1 se trouve dans la phase de vol à risque, suite à la détection d'un fonctionnement de l'installation motrice 2 dans la phase de vol à risque, le contrôleur 75 pilote une sortie du mode de fonctionnement asymétrique via une réactivation STPREAC du ou des moteurs passifs.

Selon une première variante, la sortie du mode de fonctionnement asymétrique comporte une émission STPR1 d'une alarme avec un alerteur 80. Le contrôleur 75 transmet un signal d'alarme à l'alerteur 80 qui émet l'alarme. Un pilote peut par exemple utiliser l'interface homme-machine de commande 88. Durant une étape STPR2, l'interface homme-machine de commande 88 émet un signal de sortie reçu par le contrôleur 75, ou n'émet plus le signal requérant la mise en œuvre du mode asymétrique. Ce contrôleur 75 pilote en conséquence la réactivation STPREAC de manière usuelle. Par exemple, le contrôleur 75 transmet un signal au calculateur moteur qui pilote éventuellement le démarreur et le doseur de carburant du moteur passif de manière usuelle pour atteindre un mode fonctionnement collaboratif.

Selon une deuxième variante, la réactivation STPREAC du moteur 11 passif est réalisée automatiquement par le système de régulation 55 suite à ladite détection STPD d'un fonctionnement de l'installation motrice 2 dans la phase de vol à risque. Par exemple, le contrôleur 75 transmet un signal de sortie au calculateur moteur 61 du moteur 11 passif qui peut piloter en conséquence éventuellement le démarreur et le doseur de carburant du moteur passif de manière usuelle.

Eventuellement, un pilote peut utiliser une interface homme-machine de paramétrage 81 pour sélectionner la variante à appliquer durant un vol.

Selon un autre aspect, avant de piloter la sortie du mode de fonctionnement asymétrique, le contrôleur 75 peut être configuré pour détecter si au moins un paramètre de surveillance est supérieur ou égal à la limite associée et inférieure ou égal à un seuil associé supérieur à cette limite associée. Dans l'affirmative, le contrôleur 75 peut transmettre un signal d'alerte à l'alerteur 80 pour générer une alerte signalant une entrée dans une phase transitoire proche de la ou des limites imposant une sortie du mode de fonctionnement asymétrique.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Procédé de pilotage d'un aéronef (1), ledit aéronef (1) ayant une installation motrice (2) comprenant au moins deux moteurs à combustion (10) et une chaîne de transmission (25) connectée à au moins un rotor (5), chaque moteur à combustion (10) ayant un arbre de puissance (20) connecté à la chaîne de transmission (25), le procédé comportant un mode de fonctionnement asymétrique comprenant une régulation à un régime actif, avec un système de régulation (55), d'au moins un moteur actif parmi les au moins deux moteurs à combustion (10), le moteur actif développant lors du régime actif et avec son arbre de puissance (20) une puissance motrice active non nulle participant à la mise en rotation du rotor (5), le mode de fonctionnement asymétrique comprenant, conjointement à la régulation du moteur actif au régime actif, une mise en veille d'au moins un moteur passif parmi les au moins deux moteurs à combustion (10), le moteur passif ne transmettant aucune puissance au rotor (5),
**caractérisé en ce que** lors du mode de fonctionnement asymétrique le procédé comporte les étapes suivantes :
- détection (STPD), avec le système de régulation (55), d'un fonctionnement de l'installation motrice (2) dans une phase de vol à risque précédant une phase de vol défavorable à une sortie du mode de fonctionnement asymétrique,
- suite à ladite détection d'un fonctionnement de l'installation motrice (2) dans la phase de vol à risque, réactivation (STPREAC), avec le système de régulation (55), du moteur passif.

2. Procédé selon la revendication 1,
**caractérisé en ce que** suite à ladite détection d'un fonctionnement de l'installation motrice (2) dans la phase de vol à risque, le procédé comporte une émission (STPR1) d'une alarme avec un alerteur (80), ledit système de régulation (55) effectuant la réactivation (STPREAC) du moteur passif suite à une manœuvre d'une interface homme-machine de commande (88).

3. Procédé selon l'une quelconque des revendications 1 à 2,
**caractérisé en ce que** ladite réactivation (STPREAC) du moteur passif est réalisée automatiquement par le système de régulation (55) suite à ladite détection (STPD) d'un fonctionnement de l'installation motrice (2) dans la phase de vol à risque.

4. Procédé selon l'une quelconque des revendications 1 à 3,
**caractérisé en ce que** ledit procédé comporte une mesure (STPM01-STPM6) d'au moins un paramètre de surveillance avec un senseur (40-47, 410, 440, 450, 460, 470) respectif du système de régulation (55), ladite détection (STPD) d'un fonctionnement de l'installation motrice (2) dans la phase de vol à risque comporte la détection (STPC0-STPC6) que ledit paramètre de surveillance a une valeur courante inférieure à une limite associée.

5. Procédé selon la revendication 4,
**caractérisé en ce que** ledit au moins un paramètre de surveillance comporte au moins un des paramètres suivants :
- une valeur de température fonction d'une température extérieure (T0) de l'air entournant l'aéronef (1) mesurée avec un senseur de température extérieure (40) et ladite limite associée est une limite de température extérieure (LT0) mémorisée , ladite détection (STPD) d'un fonctionnement de l'installation motrice (2) dans la phase de vol à risque comportant la détection (STPC0) que la valeur de température est inférieure à la limite de température extérieure mémorisée, et
- une température d'huile (TOIL) d'une huile d'un circuit de lubrification du moteur passif mesurée avec un senseur de température d'huile (41) et ladite limite associée est une limite de température d'huile (LTOIL) mémorisée, ladite détection (STPD) d'un fonctionnement de l'installation motrice (2) dans la phase de vol à risque comportant la détection (STPC1) que ladite température d'huile (TOIL) a une valeur courante inférieure à la limite de température d'huile (LTOIL) mémorisée, et
- une température de carburant (TFUEL) d'un carburant alimentant le moteur passif mesurée avec un senseur de température de carburant (42) et ladite limite associée est une limite de température de carburant (LTFUEL) mémorisée, ladite détection (STPD) d'un fonctionnement de l'installation motrice (2) dans la phase de vol à risque comportant la détection (STPC2) que ladite température de carburant (TFUEL) a une valeur courante inférieure à une limite de température de carburant (LTFUEL) mémorisée.

6. Procédé selon la revendication 5,
**caractérisé en ce que** la valeur de température est égale à la température extérieure (T0) ou est calculée en fonction de la température extérieure (T0) et d'une vitesse courante de l'aéronef (1) mesurée avec un senseur de vitesse (43).

7. Procédé selon l'une quelconque des revendications 4 à 6,
**caractérisé en ce que** ledit au moins un paramètre de surveillance comporte une température environnante (TCOMP) dans un compartiment moteur (100) logeant le moteur passif mesurée avec un senseur de température environnante (44) et ladite limite associée est une limite de température environnante (LTCOMP) mémorisée, ladite détection (STPD) d'un fonctionnement de l'installation motrice (2) dans la phase de vol à risque comportant la détection (STPC3) que ladite température environnante (TCOMP) a une valeur courante inférieure à la limite de température environnante (LTCOMP) mémorisée.

8. Procédé selon l'une quelconque des revendications 4 à 7,
**caractérisé en ce que** ledit au moins un paramètre de surveillance comporte une température interne (LTENG) dans le moteur passif mesurée avec un senseur de température interne (45) et ladite limite associée est une limite de température interne (LTENG) mémorisée, ladite détection (STPD) d'un fonctionnement de l'installation motrice (2) dans la phase de vol à risque comportant la détection (STPC4) que ladite température interne (LTENG) a une valeur courante inférieure à la limite de température interne (LTENG) mémorisée.

9. Procédé selon l'une quelconque des revendications 4 à 8,
**caractérisé en ce que** ledit au moins un paramètre de surveillance comporte une pression d'huile (POIL) d'une huile d'un circuit de lubrification du moteur passif, ladite pression d'huile étant mesurée avec un senseur de pression d'huile (46, 460) et ladite limite associée étant une limite de pression d'huile (LPOIL) mémorisée, ladite détection (STPD) d'un fonctionnement de l'installation motrice (2) dans la phase de vol à risque comportant la détection (STPC5) que ladite pression d'huile (POIL) a une valeur courante inférieure à la limite de pression d'huile (LPOIL) mémorisée.

10. Procédé selon l'une quelconque des revendications 4 à 9,
**caractérisé en ce que** ledit au moins un paramètre de surveillance comporte une pression de carburant (PFUEL) d'un carburant alimentant le moteur passif et ladite limite associée est une limite de pression de carburant (LPFUEL) mémorisée, ladite pression de carburant (PFUEL) étant mesurée avec un senseur de pression de carburant (47, 470), ladite détection (STPD) d'un fonctionnement de l'installation motrice (2) dans la phase de vol à risque comportant la détection (STPC6) que ladite pression de carburant (PFUEL) a une valeur courante inférieure à la limite de pression de carburant (LPFUEL) mémorisée.

11. Procédé selon l'une quelconque des revendications 4 à 10,
**caractérisé en ce que** ledit procédé comporte une émission avec l'alerteur (80) d'une alerte signalant un fonctionnement de l'aéronef dans une phase transitoire quand ledit au moins un paramètre de surveillance est supérieur ou égal à ladite limite associée et inférieure ou égal à un seuil associé, le seuil associé étant supérieur à ladite limite associée.

12. Procédé selon l'une quelconque des revendications 1 à 11, **caractérisé en ce que** ladite détection (STPD), avec le système de régulation (55), d'un fonctionnement de l'installation motrice (2) dans une phase de vol à risque précédant une phase de vol défavorable à une sortie du mode de fonctionnement asymétrique est opérée indépendamment du fonctionnement dudit au moins un moteur actif parmi les au moins deux moteurs à combustion (10).

13. Aéronef (1), ledit aéronef (1) ayant une installation motrice (2) comprenant au moins deux moteurs à combustion (10) et une chaîne de transmission (25) connectée à au moins un rotor (5), chaque moteur à combustion (10) ayant un arbre de puissance (20) connecté à la chaîne de transmission (25), ledit aéronef comportant un mode de fonctionnement asymétrique comprenant une régulation à un régime actif, avec un système de régulation (55), d'au moins un moteur actif parmi les au moins deux moteurs à combustion (10), le moteur actif développant lors du régime actif et avec son arbre de puissance (20) une puissance motrice active non nulle participant à la mise en rotation du rotor, le mode de fonctionnement asymétrique comprenant, conjointement à la régulation du moteur actif au régime actif, une mise en veille d'au moins moteur passif parmi les au moins deux moteurs à combustion, le moteur passif ne transmettant aucune puissance au rotor (5),
**caractérisé en ce que** le système de régulation (55) est configuré pour mettre en œuvre le procédé selon l'une quelconque des revendications 1 à 12.

14. Aéronef selon la revendication 13,
**caractérisé en ce que** le système de régulation (55) comporte au moins un des senseurs suivants : un senseur de température extérieure (40) mesurant une température extérieure (T0) de l'air entournant l'aéronef (1), un senseur de température d'huile (41, 410) par moteur à combustion (10) mesurant une température d'huile (TOIL) d'une huile, un senseur de température de carburant (42) mesurant une température de carburant (TFUEL) d'un carburant alimentant chaque moteur à combustion (10), un senseur de vitesse (43) mesurant une vitesse courante de l'aéronef (1), un senseur de température environnante (44, 440) par moteur à combustion mesurant une température environnante (TCOMP) dans un compartiment moteur (100) logeant un moteur à combustion (10), un senseur de température interne (45, 450) par moteur à combustion (10) mesurant une température interne (LTENG) dans le moteur à combustion (10), un senseur de pression d'huile (46, 460) par moteur à combustion (10) mesurant une pression d'huile dans le moteur à combustion (10), un senseur de pression de carburant (47, 470) par moteur à combustion (10) mesurant une pression de carburant dudit carburant circulant dans le moteur à combustion (10).

15. Aéronef selon l'une quelconque des revendications 13 à 14,
**caractérisé en ce que** le système de régulation (55) comporte un alerteur (80).
